(19) Europäisches Patentamt
European Patent Office
Office européen des brevets

(11) **EP 4 622 159 A1**

(12) **EUROPEAN PATENT APPLICATION**

(43) Date of publication:
24.09.2025 Bulletin 2025/39

(21) Application number: 25164356.5

(22) Date of filing: 18.03.2025

(51) International Patent Classification (IPC):
*H04L 5/00* (2006.01)    *H04W 52/02* (2009.01)

(52) Cooperative Patent Classification (CPC):
H04L 5/001; H04L 5/0053; H04W 52/0206

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 20.03.2024  US 202463567593 P
03.04.2024  US 202463573836 P
13.12.2024  US 202418979807

(71) Applicant: **Samsung Electronics Co., Ltd.**
**Suwon-si, Gyeonggi-do 16677 (KR)**

(72) Inventors:
• **HU, Liang**
**San Jose, CA, 95134 (US)**
• **SARTORI, Philippe Jean Marc Michel**
**San Jose, CA, 95134 (US)**

(74) Representative: **Kuhnen & Wacker**
**Patent- und Rechtsanwaltsbüro PartG mbB**
**Prinz-Ludwig-Straße 40A**
**85354 Freising (DE)**

(54) **ENHANCEMENTS TO ON-DEMAND SYNCHRONIZATION SIGNAL BLOCK (SSB) FOR CONNECTED USER EQUIPMENT**

(57)    A system and a method are disclosed for receiving, by a user equipment, UE, from a primary cell, configuration for on-demand Synchronization Signal Block, SSB, information of one or more secondary cells, receiving, by the UE from the primary cell, an activation indication from the primary cell, wherein the activation indication comprises the on-demand SSB information related to activation of the on-demand SSB of one or more secondary cells, and receiving, after receiving the activation indication, on-demand SSB transmissions by the UE from the one or more secondary cells. The activation indication and/or configuration for the on-demand SSB information includes an SSB index and/or an SSB position within an SSB burst, time-domain behavior information, and/or absolute frequency positions of the on-demand SSB.

FIG. 1

EP 4 622 159 A1

**Description**

TECHNICAL FIELD

The disclosure generally relates to improvements to 3GPP networks. More particularly, the subject matter disclosed herein relates to improvements to the network side of 3GPP and/or 6G networks.

BACKGROUND

Since the deployment of cellular systems, the trend has been towards denser networks, larger operating bandwidths, and the use of a large number of antennas. As a consequence, the power consumption of cellular networks has been increasing and now may be significant to operators' operating expenses. While power consumption reductions for a User Equipment (UE) have been standardized, there has been less standardization for reducing power consumption at the network side.

SUMMARY

Power requirements on the network side of a cellular network may be extensive. To reduce power consumption, Rel-18, 3GPP has specified features on reducing power consumption at the network level. However, network energy savings have mainly been considered with RRC_CONNECTED UEs in mind. RRC_IDLE/RRC_INACTIVE UEs also require access to the network, therefore increasing network energy consumption.

To solve this problem of power consumption on the network side, various methodologies have been implemented for RRC_CONNECTED UEs to save power. One issue with the above approach is that UEs across a network may spend a considerable amount of time in RRC_IDLE mode or RRC_INACTIVE mode. Power used on the network side in the RRC_IDLE mode or the RRC_INACTIVE mode may be considerable.

To overcome these issues, systems and methods are described herein for reducing power consumption in the RRC_IDLE mode and the RRC_INACTIVE mode by enhancements to on-demand Synchronization Signal Block (SSB) for connected UEs. The present inventive concepts propose schema for use in Rel-19 of 3GPP or for 6G. Specifically, a detailed signaling container is being proposed for downlink-based (DL-based) on-demand SSB of SCell, in particular over four different possible phases of SCell operation. In some embodiments, for a cell supporting on-demand SSB SCell operation, on-demand SSB via higher layer RRC signaling is supported for parameters such as the frequency of the on-demand SSB, SSB positions within an on-demand SSB burst by using signaling similar to *ssb-PositionsInBurst,* and/or periodicity of the on-demand SSB.

In some embodiments, multi-bits UL WUS based on a Physical Uplink Control Channel (PUCCH) or a Physical Uplink Shared Channel (PUSCH) for SCell on-demand SSB is sent to the PCell. The UE sends UL WUS to the network node, gNB, to indicate whether it needs on-demand SSB or not from the SCell. The triggering signal (WUS) may contain multiple bits of information which can be carried over PUCCH or PUSCH, instead of the physical random access channel (PRACH).

The above approaches improve on previous methods because power consumption of the UE in the RRC_IDLE mode or in the RRC_INACTIVE mode is substantially reduced.

In some embodiments, a method includes receiving, by a user equipment (UE) from a primary cell, configuration for performing radio resource management (RRM) measurements based on on-demand Synchronization Signal Block (SSB) of one or more secondary cells, receiving, by the UE from the primary cell, an activation indication from the primary cell, where the activation indication comprises the on-demand SSB information related to activation of the on-demand SSB of one or more secondary cells, and receiving, after receiving the activation indication, on-demand SSB transmissions by the UE from the one or more secondary cells. The activation indication and/or configuration for the on-demand SSB information includes an SSB index and/or an SSB position within an SSB burst, time-domain behavior information, and/or absolute frequency positions of the on-demand SSB.

In some embodiments, the method may further include receiving, by the UE from the primary cell, a deactivation indication comprising on-demand SSB information related to deactivation of on-demand SSB of one or more secondary cells, and after receiving the deactivation indication, stopping receiving of the on-demand SSB transmissions by the UE from the one or more secondary cells. The receiving the activation indication may include receiving, from the primary cell, a Medium Access Control-Control Element (MAC-CE), a Downlink Control Information (DCI), or a Radio Resource Control (RRC) message comprising the activation indication. The activation indication may be the on-demand SSB information of on-demand SSB measurement objects. The on-demand SSB information of the on-demand SSB measurement objects may include an SSB index and/or an SSB position within an SSB burst, time-domain behavior information, and/or absolute frequency positions of the on-demand SSB. The time-domain behavior information may include a number of the SSB bursts, a gap between the SSB bursts, a triggering offset, a periodicity of on-demand SSB transmissions, and/or a time offset of an SSB-based RRM Measurement Timing Configuration (SMTC) window.

In some embodiments, the activation indication may be received from the primary cell using a Medium Access Control-Control Element (MAC-CE). An on-demand SSB burst may be received by the UE at least T slots after a slot in which the UE receives activation indication from the primary cell. In some embodiments, k is equal to T, and a value of k comprises $m + 3\,N_{\mathrm{slot}}^{\mathrm{subframe},\mu} + 1$ where slot $n+m$ is a slot indicated for PUCCH transmission with HARQ-ACK information for PDSCH reception and $N_{\mathrm{slot}}^{\mathrm{subframe},\mu}$ is a number of slots per subframe for SCS configuration $\mu$ of the PUCCH transmission. The on-demand SSB burst may be received by the UE in a time window beginning in a first slot that includes a candidate SSB index 0 of a candidate secondary cell among the one or more secondary cells or includes a first actually transmitted SSB index on the one or more secondary cells. Time domain positions of the on-demand SSB burst may be configured by the gNB. Th receiving the activation indication may include receiving, from the primary cell, a Radio Resource Control (RRC) message including the activation indication. the activation indication may include the on-demand SSB information including multiple candidate values for a periodicity of on-demand SSB transmissions. The UE may receive the activation indication over a physical downlink shared channel (PDSCH). The activation indication from the primary cell includes information related to on-demand SSB measurement objects from candidate secondary cells of the one or more secondary cells. The information related to on-demand SSB measurement objects may include SSB index and/or position within an SSB burst, time-domain behavior information, and/or information related to absolute frequency positions of the on-demand SSB.

In some embodiments, the method may further include receiving, by the UE, a confirmation message that the on-demand SSB has been transmitted by the one or more secondary cells to the UE. The method may further include performing RRM measurements by the UE, by applying the configuration for the RRM measurements, responsive to the activation indication. The method may further include receiving an on-demand resynchronization request by the UE, responsive to determining that the one or more secondary cells will lose synchronization or have lost synchronization with the UE. The on-demand SSB may be triggered by a gNB or the UE. The on-demand SSB transmissions and periodic SSB transmissions may both coexist.

In some embodiments, the method may further include determining, by the UE, a need for the on-demand SSB from the one or more secondary cells, and transmitting, by the UE, an uplink Wake Up Signal (WUS) to the primary cell. The uplink WUS may include an indication of a request by the UE for the on-demand SSB from the one of more secondary cells.

In some embodiments, a system includes a user equipment (UE) comprising a transceiver configured to transmit and receive signals, a primary cell, and one or more secondary cells. The UE is configured to perform operations including receiving, by the transceiver of the UE from the primary cell, configuration for on-demand Synchronization Signal Block (SSB) information of the one or more secondary cells, receiving, by the transceiver of the UE from the primary cell, an activation indication from the primary cell, where the activation indication includes on-demand SSB information related to activation of the on-demand SSB of one or more secondary cells, and receiving, after receiving the activation indication, on-demand SSB transmissions by the UE from the one or more secondary cells. The activation indication and/or configuration for the on-demand SSB information includes an SSB index and/or an SSB position within an SSB burst, time-domain behavior information, and/or absolute frequency positions of the on-demand SSB.

In some embodiments receiving the activation indication may include receiving, from the primary cell, a Medium Access Control-Control Element (MAC-CE), a Downlink Control Information (DCI), or a Radio Resource Control (RRC) message comprising the activation indication. The activation indication comprises the on-demand SSB information of on-demand SSB measurement objects.

In some embodiments, an electronic device may include at least one processor, and at least one memory device comprising computer program code embodied on a non-transitory computer readable medium, wherein the computer program code is configured to cause the at least one processor to perform operations including receiving, by a user equipment (UE) from a primary cell, configuration for on-demand Synchronization Signal Block (SSB) information of one or more secondary cells, receiving, by the UE from the primary cell, an activation indication from the primary cell, where the activation indication comprises on-demand SSB information related to activation of the one or more secondary cells, and receiving, after receiving the activation indication, on-demand SSB transmissions by the UE from the one or more secondary cells. The activation indication and/or configuration for the on-demand SSB information includes an SSB index and/or an SSB position within an SSB burst, time-domain behavior information, and/or absolute frequency positions of the on-demand SSB.

BRIEF DESCRIPTION OF THE DRAWINGS

In the following section, the aspects of the subject matter disclosed herein will be described with reference to example embodiments illustrated in the figures, in which:

FIG. 1 shows a system including a UE and a gNB in communication with each other, with enhancements for on-demand Synchronization Signal Block (SSB), according to some embodiments.

FIG. 2 illustrates a typical procedure of normal SCell operation, according to some embodiments.

FIG. 3 illustrates the signaling exchange for a downlink-based solution, according to some embodiments.

FIG. 4 illustrates signaling for various downlink-based on-demand SSB scenarios, according to some embodiments.

FIG. 5 illustrates a procedure including Scheduling Request (SR) for the SCell on-demand SSB, according to some embodiments.

FIG. 6 illustrates a configuration for PUCCH transmission with an on-demand SSB request for the UE to transmit PUCCH, according to some embodiments.

FIG. 7 illustrates the OD-SSB configuration, the Scheduling Request configuration, and the Scheduling Request resource configuration, according to some embodiments.

FIG. 8 illustrates a procedure of SR for the PCell on-demand SSB, without the SCells transmitting the OD-SSB, according to some embodiments.

FIGS. 9 to 16 are flowcharts of operations for methods, according to some embodiments.

FIG. 17 is a block diagram of an electronic device in a network environment, according to some embodiments.

## DETAILED DESCRIPTION

In the following detailed description, numerous specific details are set forth in order to provide a thorough understanding of the disclosure. It will be understood, however, by those skilled in the art that the disclosed aspects may be practiced without these specific details. In other instances, well-known methods, procedures, components and circuits have not been described in detail to not obscure the subject matter disclosed herein.

Reference throughout this specification to "one embodiment" or "an embodiment" means that a particular feature, structure, or characteristic described in connection with the embodiment may be included in at least one embodiment disclosed herein. Thus, the appearances of the phrases "in one embodiment" or "in an embodiment" or "according to one embodiment" (or other phrases having similar import) in various places throughout this specification may not necessarily all be referring to the same embodiment. Furthermore, the particular features, structures or characteristics may be combined in any suitable manner in one or more embodiments. In this regard, as used herein, the word "exemplary" means "serving as an example, instance, or illustration." Any embodiment described herein as "exemplary" is not to be construed as necessarily preferred or advantageous over other embodiments. Additionally, the particular features, structures, or characteristics may be combined in any suitable manner in one or more embodiments. Also, depending on the context of discussion herein, a singular term may include the corresponding plural forms and a plural term may include the corresponding singular form. Similarly, a hyphenated term (e.g., "two-dimensional," "pre-determined," "pixel-specific," etc.) may be occasionally interchangeably used with a corresponding non-hyphenated version (e.g., "two dimensional," "predetermined," "pixel specific," etc.), and a capitalized entry (e.g., "Counter Clock," "Row Select," "PIXOUT," etc.) may be interchangeably used with a corresponding non-capitalized version (e.g., "counter clock," "row select," "pixout," etc.). Such occasional interchangeable uses shall not be considered inconsistent with each other.

Also, depending on the context of discussion herein, a singular term may include the corresponding plural forms and a plural term may include the corresponding singular form. It is further noted that various figures (including component diagrams) shown and discussed herein are for illustrative purpose only, and are not drawn to scale. For example, the dimensions of some of the elements may be exaggerated relative to other elements for clarity. Further, if considered appropriate, reference numerals have been repeated among the figures to indicate corresponding and/or analogous elements.

The terminology used herein is for the purpose of describing some example embodiments only and is not intended to be limiting of the claimed subject matter. As used herein, the singular forms "a," "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It will be understood that when an element or layer is referred to as being on, "connected to" or "coupled to" another element or layer, it can be directly on, connected or coupled to the other element or layer or intervening elements or layers may be present. In contrast, when an element is referred to as being "directly on," "directly connected to" or "directly coupled to" another element or layer, there are no intervening elements or layers present. Like numerals refer to like elements throughout. As used herein, the term "and/or" includes any and all combinations of one or more of the associated listed items.

The terms "first," "second," etc., as used herein, are used as labels for nouns that they precede, and do not imply any type of ordering (e.g., spatial, temporal, logical, etc.) unless explicitly defined as such. Furthermore, the same reference numerals may be used across two or more figures to refer to parts, components, blocks, circuits, units, or modules having the same or similar functionality. Such usage is, however, for simplicity of illustration and ease of discussion only; it does not imply that the construction or architectural details of such components or units are the same across all embodiments or such commonly-referenced parts/modules are the only way to implement some of the example embodiments disclosed herein.

Unless otherwise defined, all terms (including technical and scientific terms) used herein have the same meaning as commonly understood by one of ordinary skill in the art to which this subject matter belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, the term "module" refers to any combination of software, firmware and/or hardware configured to provide the functionality described herein in connection with a module. For example, software may be embodied as a software package, code and/or instruction set or instructions, and the term "hardware," as used in any implementation described herein, may include, for example, singly or in any combination, an assembly, hardwired circuitry, programmable circuitry, state machine circuitry, and/or firmware that stores instructions executed by programmable circuitry. The modules may, collectively or individually, be embodied as circuitry that forms part of a larger system, for example, but not limited to, an integrated circuit (IC), system on-a-chip (SoC), an assembly, and so forth.

"Primary cell", also referred to as "Pcell", as used herein refers to a cell that a UE initially establishes a connection and provides radio resources for communication to/from the UE. A "secondary cell", also referred to as "SCell", as used herein refers to a cell different from the primary cell with which a UE also establishes a connection and provides additional radio resources to the UE.

"SSB" as used herein refers to Synchronization Signal Blocks and is used, for example, in 5G New Radio (NR). The SSB may be comprised of the primary and secondary synchronization signals (PSS and SSS) as well as the broadcast channel (BCH), which includes the master information block (MIB). SSB provide a scheme for time and frequency domain resource allocation.

"MAC-CE" as used herein refers to "Medium Access Control-Control Element" and is a form of in-band control signaling in 3GPP/LTE and is identified by a reserved value in the Logical Channel ID (LCID) field, which indicates the type of control information it carries. MAC Control Elements (i.e., MAC-CEs) are special messages exchanged between the UE and the network to manage various aspects of communication over the radio interface. MAC-CEs may facilitate Contention Resolution, which is a process used to resolve conflicts when multiple UEs attempt to access the same radio resources simultaneously.

"DCI" as used herein refers to "Downlink Control Information", which is transmitted through the Physical Downlink Control Channel (PDCCH). DCI may be used for carrying the information to schedule (allocate physical resources) for Downlink Data (PDSCH) and for carrying the information to schedule (allocate physical resources) for Uplink Data (PUSCH). DCI may include information about DL-SCH resource allocation, transport format, and DL-SCH Hybrid Automatic Repeat reQuest (ARQ). DCI may be used for paging and RMSI scheduling, and for indicating status changes.

"RRC" as used herein refers to "Radio Resource Control" and is a 3GPP protocol that manages how devices connect and communicate with networks. RRC is a layer 3 protocol that operates between the UE and the gNB on the air interface.

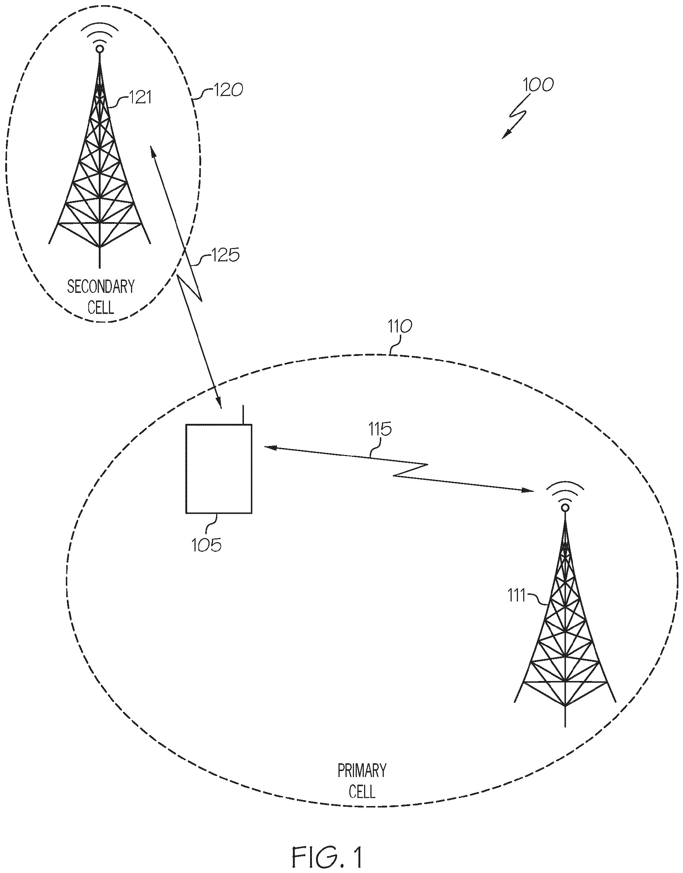

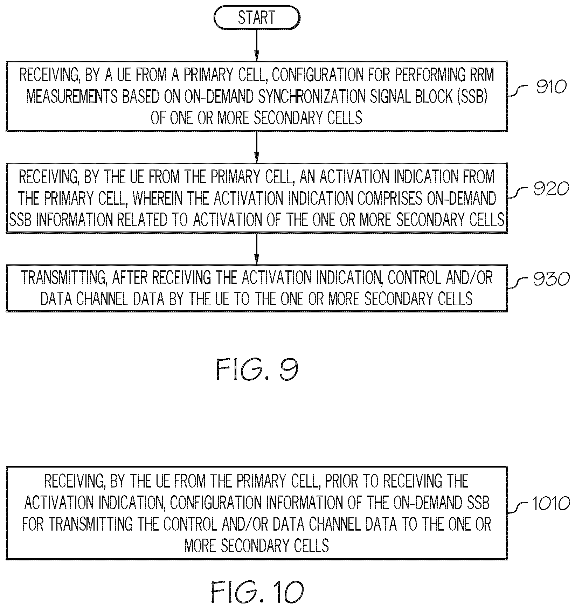

FIG. 1 depicts an example system including a UE 105 and a network node, such as gNB 111, in communication with each other. The UE 105 may include a radio and a processing circuit, which may perform various methods disclosed herein, e.g., the method illustrated in FIG. 9. For example, the processing circuit of UE 105 may receive, via the radio channel 115, transmissions from the network node (gNB) 111, and the processing circuit of UE 105 may transmit, via the radio channel 115, signals to the gNB 111. The gNB 111 may be associated with a primary cell 110 whereas a gNB 121 may be associated with secondary cell 120. UE 105 may be in communication with gNB 121 associated with secondary cell 120 via a radio channel 125. A gNB (gNodeB) may be the 5G/6G equivalent of a base station in a cellular network.

Legacy systems have enacted network energy savings by specifying procedures and signaling methods that support on-demand SSB SCell operation for UEs in a connected mode of operation that are configured with Carrier Aggregation (CA) for both intra-/inter-band CA. The procedure specifies a triggering method that is selected from: 1) UE uplink wake-up-signal (UL WUS) using an existing signal/channel, 2) cell on/off indication via backhaul, or 3) SCell activation/deactivation signaling. On-demand SSB transmission may be used by the UE for at least SCell time/frequency synchronization, L1/L3 measurements, and SCell activation, and is supported for the Frequency Range 1 (FR1) and the Frequency Range 2 (FR2) in non-shared spectrum in a 5G network. FR1 is also known as the sub-6 GHz range, and includes frequency bands from 450 MHz to 6 GHz. FR1 is the primary band for 5G and includes some bands that were previously used by other standards. FR2 is also known as the mmWave spectrum. FR2 includes frequency bands from 24.25 GHz to 52.6 GHz. Bands in this range have a shorter range but higher available bandwidth than FR1 bands.

Procedures and signaling methods to support on-demand

SystemInformationBlockType1 (SIB1) for UEs in idle/inactive mode are being studied. These procedures include the triggering method by uplink wake-up-signal using an existing signals/channels, wake-up-signal configuration provisioning to a UE without modification of the SSB, and/or information exchange between gNBs at least for the configuration of the wake-up signal.

Adaptation of common signal/channel transmissions is also being studied. Common signal/channel transmissions that are being studied include adaptation of SSB in the time domain such as by adapting periodicity, adaptation of physical random access channel (PRACH) in the time domain, adaptation of PRACH in the spatial domain, for example, using non-uniform PRACH resources per SSB, adaptation of paging occasions including confining the paging occasions in the time domain without paging latency increase. It is desirable for these changes to common signal/channel transmissions to be implemented without a negative impact to legacy UEs, unless there are significant benefits.

In 3GPP, a primary cell (PCell) 110 is a cell that a UE 105 initially connects to and establishes a connection with. Once connected, one or more secondary cells (SCell) 120 can be configured to provide additional radio resources to the UE 105 in addition to radio resources provided by the PCell 110.

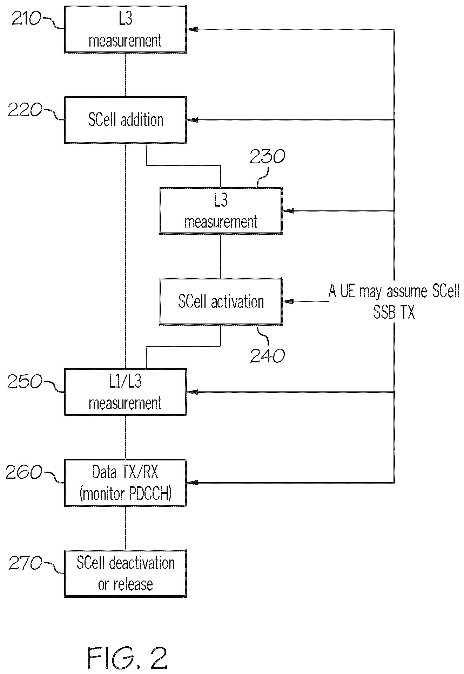

FIG. 2 illustrates a typical procedure for normal SCell operation with SSB. Referring to FIG. 2, SSB transmission on the SCell is configured as an SCell addition, at block 220, and may be optionally configured in L3 measurement configuration before the SCell addition, at block 210. The initial state of the SCell may be "activated" or "deactivated". Based on the SCell state, the SCell can be activated, at block 240, or deactivated afterwards, at block 270. An SCell activation delay is defined depending on the SCell SSB periodicity and based on whether the SCell is already known or not to the UE. When the SCell is in an activated state, the UE performs normal SCell operation such as monitoring the Physical Downlink Control Channel (PDCCH), at block 260, on the SCell for data transmit/receive and channel state information (CSI) reporting, at block 250. In order to ensure normal operation, while the SCell is in an activated state, a UE would expect SSB on SCell to be transmitted periodically according to the configurations which may be updated by Radio Resource Control (RRC) reconfiguration. In addition, L3 measurement on the SCell may be performed when the SCell is in the activated state or L3 measurement may be performed in the deactivated state, at block 230. L3 measurement may require periodic SSB transmission according to the RRC configuration.

Currently, the UE on an active SCell may assume that SSB is transmitted with a configured SSB periodicity (at longest time period of 160ms) to meet the radio resource management (RRM)/Demodulation requirements. While the UE is in a deactivated state, the SCell may not assume that the SSB will be transmitted, unless a deactivated SCell measurement operation is configured.

European Telecommunications Standards Institute (ETSI) Technical Specification TS 38.321 may provide example details regarding the activation and deactivation of SCells. If the MAC entity is configured with one or more SCells, the network may activate or deactivate the configured SCells. Upon configuration of an SCell, the SCell may be deactivated. The configured SCells may be activated or deactivated by receiving the SCell Activation/Deactivation MAC-CE, as discussed in clause 6.1.3.10 of ETSI TS 38.321, or by configuring and *sCellDeactivationTimer* timer per configured SCell (except for any SCell configured with PUCCH). The associated SCell may be deactivated upon the expiry of the *sCellDeactivationTimer* timer.

The MAC entity for each configured SCell may activate the SCell according to the timing defined in ETSI TS 38.213, which applies to normal SCell operation, if an SCell Activation/Deactivation MAC-CE is received indicating to activate the SCell. Applying normal SCell operations in this case may include applying Sounding Reference Signal (SRS) transmissions on the SCell, CSI reporting for the SCell, PDCCH monitoring on the SCell, and/or PUCCH transmissions on the SCell, if configured. If the SCell was deactivated prior to receiving this SCell Activation/Deactivation MAC-CE, the downlink bandwidth part (DL BWP) and/or the uplink bandwidth part (UL BWP) may be activated as indicated by *firstActiveDownlinkBWP-Id* and *firstActiveUplinkBWP-Id* respectively. This may be accomplished by starting or restarting the *sCellDeactivationTimer* associated with the SCell according to the timing defined in TS 38.213. Any suspended configured uplink grants of configured grant Type 1 associated with this SCell according to the stored configuration, if any, may be re-initialized. A power headroom report (PHR) may be triggered when activating the SCell.

If an SCell Deactivation MAC-CE is received indicating to deactivate the SCell, or if the *sCellDeactivationTimer* associated with the activated SCell expires, the SCell may be deactivated according to timing specified in ETSI TS 38.213. In this case, the *sCellDeactivationTimer* associated with the SCell may be stopped, the *bwp-InactivityTimer* associated with the SCell may be stopped, any active BWP associated with the SCell may be deactivated, any configured downlink assignment and any configured uplink grant Type 2 associated with the SCell respectively may be cleared, any PUSCH resource for semi-persistent CSI reporting associated with the SCell may be cleared, any configured uplink grant Type 1 associated with the SCell may be suspended, and HARQ buffers associated with the SCell may be flushed.

If the PDCCH on the activated SCell indicates an uplink grant or downlink assignment, or if PDCCH on the Serving Cell scheduling the activated SCell indicates an uplink grant or a downlink assignment for the activated SCell, or if a MAC PDU is transmitted in a configured uplink grant or received in a configured downlink assignment, the timer *sCellDeactivationTimer* associated with the SCell is restarted. If the SCell is deactivated, the SRS is not transmitted on the SCell, the CSI is not reported for the SCell, the UL-SCH is not transmitted on the SCell, RACH is not transmitted on the SCell, the PDCCH is not monitored the on the SCell, PDCCH is not monitored the for the SCell, and/or the PUCCH is not transmitted on the SCell.

HARQ feedback for the MAC PDU including an SCell Activation/Deactivation MAC-CE may not be impacted by the PCell, the PSCell and PUCCH SCell interruptions due to SCell activation/deactivation, as discussed in ETSI TS 38.133. When the SCell is deactivated, the ongoing Random Access procedure on the SCell, if any, is aborted. The SCell often refers to frequency carriers in addition to the primary frequency carrier (PCell) by Carrier Aggregation (CA). One of the functions for the SCell is to provide more data bandwidth in other carrier frequencies, typically higher frequencies, for boosting data throughput whereas the purpose of the PCell is for ensuring the coverage.

In Rel-15, Enhancing LTE CA Utilization (euCA), a new SCell state, referred to as the dormant SCell state, is introduced so that SCells can become inactive for power saving when the data transmission requirement is not high. The euCA allows a UE to perform measurements while idle or inactive. In other words, if the SCell is in the dormant state, the UE may stop monitoring the PDCCH in the SCell, but activities such as CSI measurement and/or reporting and RRM measurement may not be impacted. The transition in and out of SCell dormant state are achieved via Medium Access Control (MAC) signaling.

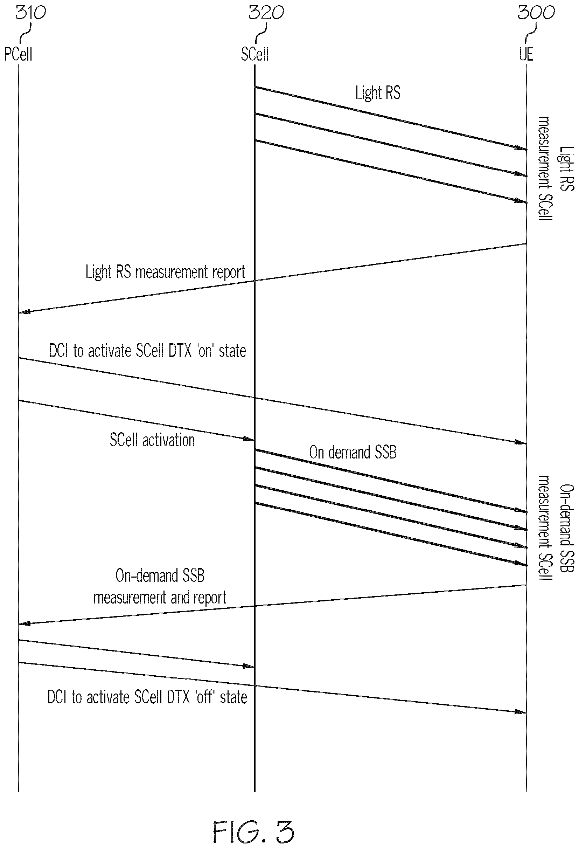

FIG. 3 illustrates the signaling exchange for a downlink-based solution, according to some embodiments. Referring once again to FIG. 1, the UE 105 may move into the coverage of one or more SCells 120, while the UE 105 remains in RRC-connected state in the PCell 110 of the macro cell. Referring to FIG. 3, in some embodiments, the UE 300 may start measuring the light Reference Signal (RS) by measuring the Reference Signal Received Power (RSRP) or the Received Signal Strength Indicator (RSSI) of all neighboring SCells 320, according to the previously received measurement configurations from the PCell 310. The light RS may be in a compact modified SSB pattern or in a legacy SSB pattern but with spare periodicity for the network elements (NES). The UE 300 may then report the SCell measurements to the PCell 310. A check may be performed if the UE 300 received an indication that the OD-SSB on the SCell 320 has been activated. After the UE's 300 reporting of the SCell measurements to the PCell 310 is completed, the network may decide to activate the OD-SSB on the SCell. The OD-SSB is not periodic, i.e., on-demand, and thus may save power. The gNB may send a message to the UE 300 to indicate that OD-SSB of the SCell has been activated, which corresponds to the DCI activating SCell Discontinuous Transmission (DTX) to the "on" state. If UE 300 has received the OD-SSB activation indication, UE 300 performs OD-SSB based measurements and/or reporting, and then stops monitoring the light RS. If UE 300 has received the OD-SSB de-activation indication, the UE 300 stops OD-SSB based measurements and/or reporting. In some embodiments, the UE 300 may start monitoring the light RS.

The SCell activation may be accomplished in several ways. In some embodiments, the activation of legacy SSB transmission may be done by legacy SCell activation by a MAC Control Element (MAC-CE). This activation may be done implicitly with a MAC-CE indicating a legacy SSB activation, and automatically deactivating the light RS monitoring associated with this SSB. This activation may be done explicitly, in some embodiments, with a MAC-CE including an additional field to carry information related to the legacy SSB activation.

In some embodiments, the SCell may be activated or deactivated with new Downlink Control Information (DCI). In some cases, it may be necessary to fast wake up the SCell. In such cases, physical layer signaling may be sent, since physical layer signaling has low latency. The design of a new DCI to accommodate the physical layer signaling may be needed.

In some embodiments, RRC signaling can also be used by, for example, sending a new light RS configuration to the UE. When the new light RS configuration is received by the UE, the UE may assume that a light RS not being present indicates that the corresponding SCell has been turned on, which corresponds to the DCI activating SCell DTX to the "off" state.

In the context of network energy savings, RAN1 is standardizing solutions where some cells may not transmit SSB signals. However, RRC-CONNECTED UEs may require the SSB for multiple purposes. One of these purposes is to perform measurements in other cells. While in legacy systems, the SSB is always transmitted, with NES, this may not be the case, which would mean that the UE cannot perform measurements. Therefore, embodiments of the present inventive concepts arise from the recognition that there is a need for RRC-CONNECTED UEs to be able to require on-demand transmission of SSB for SCells where NES features are deployed.

Embodiments of the present inventive concepts are related to on-demand SSB for SCell RRC connected UEs. According to some embodiments, a signaling container and related UE behaviors for downlink-based (DL-based) on-demand SSB of the SCell will be discussed for four different possible phases of SCell operation. According to some embodiments, the UE may trigger OD-SSB of the SCell by transmitting UL WUS to the PCell via an enhanced scheduling request (SR) framework. The main benefits of UL WUS sent to the PCell may three-fold. Firstly, when the UE experiences an outage or experiences link quality degradation, UE initiated triggering of OD-SSB to the PCell reduces the latency and signaling overhead for link recovery, compared to DL-based triggering where the gNB first needs to pull the UE measurement reports and then the gNB determines whether to trigger OD-SSB. Secondly, compared to UL WUS sent to the SCell, the energy consumption of the SCell may be reduced since the SCell is not required to monitor the UL WUS signal. Thirdly, when the UE needs the OD-SSB from multiple SCells, a single UL WUS sent to a PCell may be sufficient, compared to the UL WUS sent to SCells, where multiple UL WUS signals need to be sent to each individual SCell.

According to various embodiments of the present inventive concepts, on-demand transmission of SSB for SCells may be accomplished using a detailed signaling container for DL-based on-demand SSB of the SCell, in particular over four different possible phases of the SCell operations. Furthermore, multi-bits of the UL WUS based on the PUCCH/-PUSCH for SCell on-demand SSB, may be sent to the PCell. The UE sends the UL WUS to the gNB to indicate whether the UE needs on-demand SSB from the SCell. If on-demand SSB is needed by the UE, the SSB periodicity that is needed is indicated. The triggering signal (i.e., the WUS) may include multiple bits of information which can be carried over the PUCCH/PUSCH, instead of the PRACH.

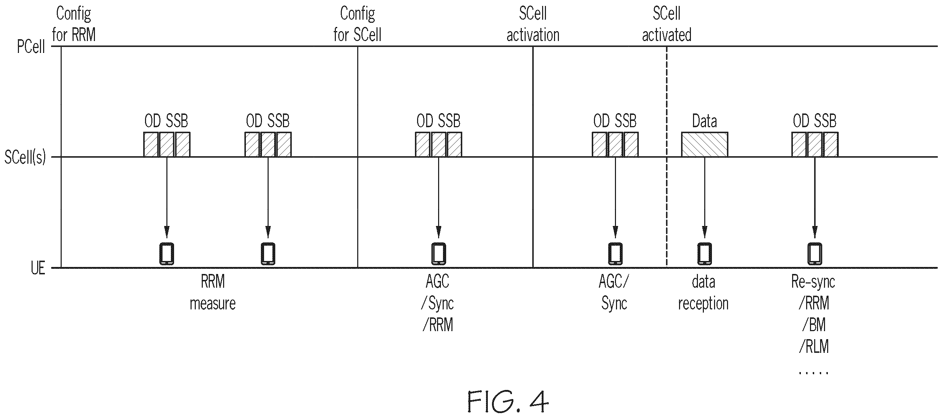

FIG. 4 illustrates signaling for various downlink-based on-demand SSB scenarios, according to some embodiments. For DL-based on-demand SSB solutions, the overall signaling flow chart is as shown in FIG. 4, which includes signaling details to cover specific scenarios of DL-based OD-SSB operations between a UE, such as UE 105 of FIG. 1, a primary cell 110 of FIG. 1, and one or more secondary cells, such as secondary cell 120 of FIG. 1. Four scenarios of on-demand SSB are illustrated in FIG. 4.

In the first scenario of FIG. 4, when the UE is configured to perform RRM measurement based on a SSB on a SCell, the SSB utilized for RRM measurement may be on-demand, instead of being periodic, as in legacy solutions.

In the second scenario of FIG. 4, when the SCell is configured, but not activated, in addition to OD-SSB for RRM purposes (e.g., L3 measurement), the SSB utilized for the Automatic Gain Control (AGC) and synchronization purposes may be on-demand instead of being periodic as in legacy solutions.

In the third scenario of FIG. 4, after the SCell is configured and activated, in addition to OD-SSB for RRM purposes (L3 measurement), if the UE or gNB determines that the SCell may lose synchronization, the SSB for resynchronization purposes may be on-demand instead of being periodic as in legacy solutions.

In the fourth scenario of FIG. 4, after the one or more SCells are activated, the UE is able to transmit and/or receive control channels and/or data channels on the SCell. In addition to OD-SSB for RRM purposes, OD-SSB may be used for AGC and Synchronization, L1/L3 RSRP/RSRQ measurement for RRM, L1 RSRP/RSRQ measurement for RLF detection, beam Management (including BFD/BFR), random access, paging, Quasi CoLocation (QCL) source reference signal, and/or timing reference for path-loss estimation.

For the first scenario described above (i.e., when the UE is configured to perform RRM measurement), when the DL-based OD-SSB solution is employed, the UE receives an OD-SSB activation indication from the PCell and performs L3 measurement of the SSBs of a set of candidate cells for RRM before a candidate cell is configured as an SCell. The indicator may be carried by a MAC-CE, by DCI, or by a RRC message. In addition to on-demand "aperiodic" SSB transmission, in some scenarios, "periodic-based" or "semi-periodic" SSB transmissions may be more suitable for efficient operation, to avoid potential large overhead of indication for aperiodic transmissions. For example, periodic or semi-periodic transmissions enable UEs to monitor and track the performance of the cell and/or beam, offering on-demand SSB in real-time (e.g., FR2 small cell for on-demand SSB), that may achieve better NES gain, in some scenarios. In this sense, enhancement for "periodic-based" SSB transmission can also be a target of on-demand transmission. The state (i.e., on/off) and properties (e.g., periodicity, position) of "periodic-based" SSB may be changeable according to overall network management compared to legacy operations. Thus, "semi-persistent" SSB transmissions allow periodic SSB transmissions to be turned on/off via a faster method over the legacy RRC-configuration.

According to some embodiments, the activation indication message (MAC-CE, DCI, or RRC) from the PCell includes information of the OD-SSB measurement objects i.e., the OD-SSB from candidate SCells. This information includes SSB index/position within an SSB burst, such as, for example, using a similar structure as *ssb-PositionsInBurst,* time-domain behavior information, or information related to the absolute frequency positions of the SSB, such as, for example, using a similar definition as *absoluteFrequencySSB*. The time-domain behavior information may indicate, for aperiodic OD-SSB transmissions, the number of SSB bursts (for example, how many SSB bursts are transmitted at one triggering), gap length between SSB bursts, and/or triggering offset. For RRM measurements, the periodicity, time duration, and time offset of the SSB-based RRM Measurement Timing Configuration (SMTC) window may be provided. If multiple SSB bursts are triggered in one SCell, all bursts in the SCell may share the same configurations including antenna port index, OFDM symbol location, and/or Physical Resource Block (PRB) location.

Additionally, the OD-SSB measurement object may include other information such as *deriveSSB-IndexFromCell, ssb-ToMeasure, freqBandIndicatorNR, ssbFrequency, ssbSubcarrierSpacing,* and/or *quantityConfigIndex.* If the *deriveSSB-IndexFromCell* field is set to true, the UE assumes that the System Frame Number (SFN) and frame boundary alignment across cells on the same frequency carrier. This *deriveSSB-IndexFromCell* field indicates whether the UE may utilize the timing of this serving cell to derive the index of the SS block transmitted by neighbor cells. In some embodiments, this field may indicate whether the UE may use the timing of any detected cell on that target frequency to derive the SSB index of all neighbor cells on that frequency. The *ssb-ToMeasure* indicates the set of SS blocks to be measured within the SMTC measurement duration. The first/leftmost bit corresponds to SS/PBCH block index 0, the second bit corresponds to SS/PBCH block index 1, and so on. Value 0 in the bitmap indicates that the corresponding SS/PBCH block is not to be measured while value 1 indicates that the corresponding SS/PBCH block is to be measured. When the *ssb-ToMeasure* field is not configured, the UE measures on all SS blocks. The *freqBandIndicatorNR* indicates the frequency band for SSB transmission. The *ssbFrequency* indicates the frequency for SSB transmission. Frequencies are considered to be on the sync raster if they are also identifiable with a Global Synchronization Channel Number (GSCN) value. The *ssbSubcarrierSpacing indicates* the subcarrier spacing for SSB transmission. The *quantityConfigIndex* indicates the OD-SSB specific measurement report configuration, similar to legacy SSB measurement configurations.

In addition, the activation indication (MAC-CE, DCI, or RRC) may also include the information of multiple candidate SCells. The set of SCells with the OD-SSB transmissions in the "on" or "off" state is mapped via a bitmap of "1" or "0". The bitmap of the set of SCells in the activation indication (MAC-CE, DCI, or RRC) may correspond to the set of SCells over which the UE performs OD-SSB measurement and reporting. One example of the bitmap for one UE can be as follows:

|  | Scell1 | Scell2 | Scell3 | Scell4 | Scell5 |
|---|---|---|---|---|---|
| OD-SSB 1 | 1 | 0 | 0 | 0 | 0 |
| OD-SSB 2 | 0 | 1 | 0 | 0 | 0 |
| OD-SSB 3 | 0 | 0 | 1 | 0 | 0 |
| OD-SSB 4 | 0 | 0 | 0 | 1 | 0 |
| OD-SSB 5 | 0 | 0 | 0 | 0 | 1 |

According to some embodiments, OD-SSB activation indication may also be based on a dynamic group common DCI from the PCell, where UEs are initially preconfigured by RRC with a set of possible OD-SSB measurement configurations (including a measurement object ID and a report ID, respectively), similar to legacy SSB RRM measurements. Each of the OD-SSB measurement objects include IEs such as the SSB index/position within a SSB burst, for example, using a similar structure as *ssb-PositionsInBurst,* time-domain behavior, and/or absolute frequency position(s) of the SSB. The time-domain behavior information for aperiodic transmissions may include the number of SSB bursts (i.e., how many SSB bursts are transmitted at one triggering), gap length between SSB bursts, and/or triggering offset. For periodic/semi-persistent SSB transmissions, the periodicity may be included in the time-domain behavior information. The absolute frequency position information of the SSB may include, for example, a similar definition as the *absoluteFrequencySSB.*

Each of the OD-SSB report ID may include AGC and synchronization, L1/L3 RSRP/RSRQ measurement for RRM, L1 RSRP/RSRQ measurement for RLF detection, BM (including BFD/BFR), random access, paging, RLF monitoring, QCL source reference signal, and/or a timing reference for path-loss estimation. Furthermore, the codepoint of this group common DCI may indicate the following information:

|  | Scell1 | Scell2 | Scell3 | Scell4 | Scell5 |
|---|---|---|---|---|---|
| OD-SSB Object ID | 1 | 2 | 5 | 4 | 3 |
| OD-SSB Report ID | 1 | 2 | 5 | 3 | 4 |

In terms of the timing, the OD-SSB activation indication (e.g., via the MAC-CE or the RRC) has an associated timer for each candidate SCell defined as the OD-SSB-Timer. Before the OD-SSB-Timer expires, the UE measures the OD-SSB as indicated by the activation indication, except in some cases. In some embodiments, upon the UE receiving another OD-SSB deactivation indication from the PCell to deactivate the OD-SSB of a given candidate SCell, the UE stops monitoring/receiving the OD-SSB from the given candidate SCell. In some embodiments, upon the UE receiving a SCell activation/deactivation indication from the PCell indicating that a given candidate cell is activated/deactivated as the SCell, the UE stops monitoring/receiving the OD-SSB from that given candidate cell. In some embodiments, upon the UE receiving an RRC message from the PCell indicating that a given candidate cell is added, configured, reconfigured, or removed as an SCell, the UE stops monitoring/receiving the OD-SSB from that given candidate cell. Upon receiving the OD-SSB activation indication at slot n, the UE may start applying the OD-SSB measurement behavior defined no earlier than slot n+k1 and no later than slot n+k2.

In the second scenario described above, (i.e., when the SCell is configured, but not activated), the UE may receive the OD-SSB activation indication from the PCell after the candidate cells are configured as SCells, but before they are activated by the PCell. The indication may be carried by the MAC-CE, DCI, or the RRC message. The content or container of the indicator may be similar as the scenario when the UE is configured to perform RRM measurement. The UE performs L1 SSB measurements for the AGC and the synchronization, and may also perform RRM measurement reporting to the PCell, similar to the scenario when the UE is configured to perform RRM measurement.

Specifically, for a cell supporting on-demand SSB SCell operation, at least the following for on-demand SSB via higher layer RRC signaling is supported: frequency of the on-demand SSB, SSB positions within an on-demand SSB burst by using signaling similar to *ssb-PositionsInBurst,* and/or periodicity of the on-demand SSB. Whether more than one on-demand SSB configurations can be configured for the cell to UE and/or whether the RRC is newly introduced and/or existing RRC is reused may be determined by further study.

Furthermore, for a cell supporting on-demand SSB SCell operation, at least for some parameters such as the periodicity of the on-demand SSB, multiple candidate values may be configured by RRC and the applicable value may be indicated by MAC CE for on-demand SSB transmission indication for the cell. Other relevant parameters may be determined by further study.

In terms of timing, the OD-SSB activation indication may have an associated timer for each SCell defined as the OD-SSB-Timer. Before the OD-SSB-Timer expires, the UE may measure the OD-SSB as indicated by the indicator, except under some conditions that will now be described. In some embodiments, upon the UE receiving another OD-SSB deactivation indication from the PCell to deactivate the OD-SSB of a given SCell, the UE may stop monitoring and/or receiving the OD-SSB from the given SCell. In some embodiments, upon the UE receiving an SCell activation/deactivation indication from the PCell indicating that a given SCell is activated/deactivated, the UE may stop monitoring and/or receiving the OD-SSB from the given SCell. In some embodiments, upon the UE receiving an RRC message from the PCell indicating that a given SCell is removed as an SCell, the UE may stop monitoring and/or receiving the OD-SSB from the given SCell. Upon receiving OD-SSB activation indication at slot n, the UE may start applying the OD-SSB measurement behavior defined no earlier than slot n+k1 and no later than slot n+k2.

In the third scenario described above, (i.e., after the SCell is configured and activated) the UE may receive the OD-SSB activation indication from the PCell after the SCells receive the activation indication from the PCell, but before the SCells are fully activated. The indication may be carried by the MAC-CE, DCI, or the RRC message. The content or container of the indication may be similar as the scenario when the UE is configured to perform RRM measurement. The UE may perform L1 SSB measurements for AGC and synchronization, without measurement reports send to the PCell.

The OD-SSB activation indication may have an associated timer for each SCell, defined as the OD-SSB-Timer. Before the OD-SSB-Timer expires, the UE may measure the OD-SSB as indicated by the indication, except for some conditions. In some embodiments, upon the UE receiving another OD-SSB deactivation indication from the PCell to deactivate the OD-SSB of a given SCell, the UE may stop monitoring and/or receiving the OD-SSB from the given SCell. In some embodiments, upon the UE receiving downlink (DL) data from a given SCell or transmitting uplink data to a given SCell, and upon a given SCell being fully activated, the UE may stop monitoring and/or receiving the OD-SSB from the given SCell. Upon receiving OD-SSB activation indication at slot n, the UE may start applying the OD-SSB measurement behavior defined no earlier than slot n+k1 and no later than slot n+k2, where k is a number of slots.

In the fourth scenario described above, (i.e., after the SCell is activated), the UE may receive an OD-SSB activation indication from the PCell after the one or more SCells are fully activated, but before receiving an SCell deactivation indication from the PCell or the SCell activation timer expiring. The indication may be carried by the MAC-CE, DCI, or the RRC message. The content or container of the indication may be similar as the scenario when the UE is configured to perform RRM measurement. The UE may perform L1/L3 SSB measurements for AGC, Synchronization, RRM measurements, random access, paging, RLF monitoring, BFD monitoring, beam management, QCL source reference signal, and/or timing reference for path-loss estimation with or without measurement reports to the PCell. In terms of timing, the OD-SSB indication has an associated timer for each SCell defined as the OD-SSB-Timer. Before the OD-SSB-Timer expires, the UE measures the OD-SSB with or without measurement reporting to the PCell, as indicated by the indication, except for some conditions. In some embodiments, upon the UE receiving another OD-SSB deactivation indication from the PCell to deactivate the OD-SSB of a given SCell, the UE stops monitoring and/or receiving the OD-SSB from that given SCell. In some embodiments, upon the UE receiving the SCell deactivation indication from the PCell or the SCell activation timer expiring (*sCellDeactivationTimer),* the UE stops monitoring and/or receiving the OD-SSB from that given SCell. Upon receiving the OD-SSB activation indication at slot n, the UE starts applying the OD-SSB measurement behavior defined no earlier than slot n+k1 and no later than slot n+k2, where k is a number of slots.

For the OD-SSB activation and deactivation timing at L1, with reference to slots for PUCCH transmissions, when a UE receives an activation indication for a secondary cell ending in slot *n* in a PDSCH, the UE applies the corresponding actions no later than the minimum requirement T1 to be defined in TS 38.133 and no earlier than slot *n + k.* Corresponding UE actions that may be performed include SSB reception for AGC and Synchronization, SSB reception for L1/L3 RSRP/RSRQ measurement for RRM, SSB reception L1 RSRP/RSRQ measurement for RLF detection, SSB reception for Beam Management (including beam failure detection and recovery), SSB reception for perform random access, SSB reception for paging, SSB measurement for Radio Link Failure monitoring, SSB reception for QCL source reference signal, and/or SSB reception for Timing reference for path-loss estimation. Some actions that may not be performed include the actions related to CSI reporting for L1 SSB measurements (e.g., L1 RSRP/RSRQ/RSSI) on a serving cell that is active in slot *n + k*, the actions related to the OD-SSB-Timer associated with the secondary cell mentioned above that the UE applies in slot *n + k,* and/or the actions related to CSI reporting for L1 SSB measurements (e.g., L1 RSRP/RSRQ/RSSI) on a serving cell which is not active in slot *n + k* that the UE applies in the earliest slot after *n + k* in which the serving cell is active. The value of *k* is $m + 3\,N_{\text{slot}}^{\text{subframe},\mu} + 1$ where slot *n+m* is a slot indicated for PUCCH transmission with HARQ-ACK information for the PDSCH reception and $N_{\text{slot}}^{\text{subframe},\mu}$ is a number of slots per subframe for the SCS configuration $\mu$ of the PUCCH transmission as defined in TS 38.211. The PDSCH carries encoded user data and paging information to the UE. The PDCCH conveys encoded control information and scheduling decisions for PDSCH reception.

With reference to slots for PUCCH transmissions, if a UE receives an OD-SSB deactivation indicator for a secondary cell ending in slot *n,* the UE applies the corresponding actions defined above in no later than the minimum requirement T2 to be defined in TS 38.133, except for the actions related to CSI reporting for L1 SSB measurements (e.g., L1 RSRP/RSRQ/RSSI) on an activated serving cell which the UE applies in slot *n + k.* If the OD-SSB-Timer associated with the secondary cell expires in slot *n,* the UE applies the corresponding actions defined above no later than the minimum requirement T3, except for the actions related to CSI reporting for L1 SSB measurements (e.g., L1 RSRP/RSRQ/RSSI) on an activated serving cell which the UE applies in the first slot that is after slot $n + 3 \cdot N_{\text{slot}}^{\text{subframe},\mu}$ where $\mu$ is the SCS configuration for PDSCH reception on the secondary cell.

Specifically, for SSB bursts indicated by on-demand SSB SCell operation via a MAC CE, the UE expects that the on-demand SSB bursts are transmitted from time instance A. Time instance A is determined as the beginning of the first slot including the candidate SSB index 0 or the first actually transmitted SSB index of the on-demand SSB burst, which is at least T slots after the slot where UE receives signaling from gNB to indicate on-demand SSB transmission, where T is an integer. The SSB time domain positions of on-demand SSB burst may be configured by gNB. The value of T may not be less than an existing timeline required for UE's MAC CE processing for SCell activation. T is not less than T_min=$m + 3N_{slot}^{subframe,\mu}+1$ where slot *n+m* is a slot indicated for PUCCH transmission with HARQ-QCK information when the UE receives MAC CE signaling to indicate on-demand SSB transmission ending in slot *n,* and $N_{slot}^{subframe,\mu}$ is as defined in ETSI specifications. The aforementioned description applies at least for the case where an SCell with on demand SSB transmission and a cell with signaling transmission have the same numerology.

According to some embodiments, signaling for the UL PUCCH based on-demand SSB may be accomplished by the UE triggering the OD-SSB of the SCell for transmitting UL WUS to the PCell via an enhanced scheduling request (SR) framework. The main benefits of UL WUS sent to the PCell are may be three-fold. Firstly, when the UE experiences an outage or link quality degradation, if the UE initiates triggering of the OD-SSB to the PCell, the latency and signaling overhead for link recovery may be greatly reduced, compared to DL-based triggering where the gNB first needs to obtain the UE measurement reports and then decide whether to trigger OD-SSB or not. Secondly, compared to the UL WUS being sent to the SCell, the energy consumption of SCell is further reduced since the SCell does not need to monitor the UL WUS signal. Thirdly, when the UE needs the OD-SSB from multiple SCells, a single UL WUS sent to the PCell may be sufficient, compared to the UL WUS being sent to multiple individual SCells.

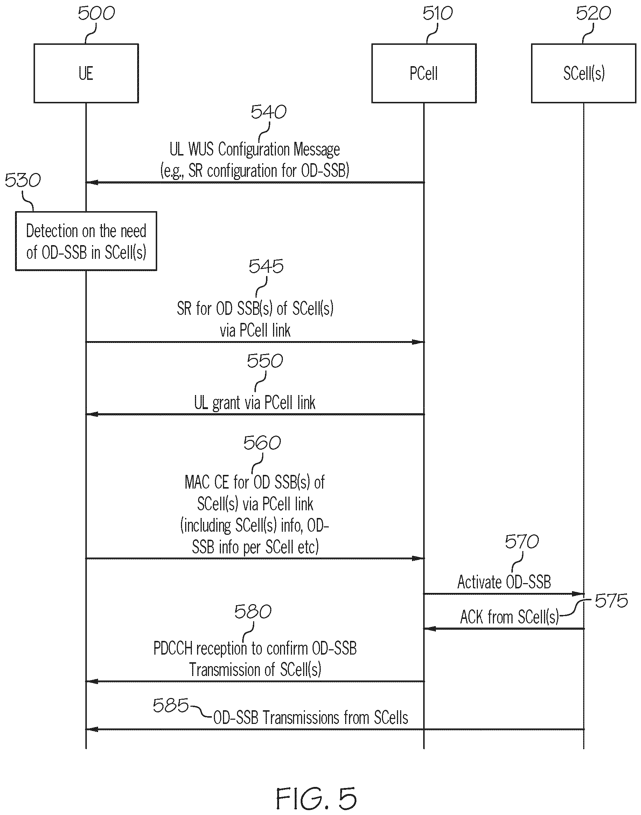

For Connected UEs requesting the SCell for the on-demand SSB, in addition to PRACH based solution, the Scheduling Request (SR) may be used for requesting new on-demand SSB transmissions. The SR has been used for the SCell beam failure recovery and has the potential to apply to the SCell on-demand SSB. The overall procedure of SR for the SCell on-demand SSB is illustrated in FIG. 5. In the scenario of FIG. 5, the UE is RRC connected with a PCell. The SCells may be in a sleep mode with no DL transmissions (including SSB) and no UL reception. In some embodiments, the SCells may transmit some light SSB in the DL, which allows the UEs to perform measurements and cell selection. In some embodiments, the SCells may periodically perform UL reception from the UEs, such as, for example, the UL WUS signal from the UEs.

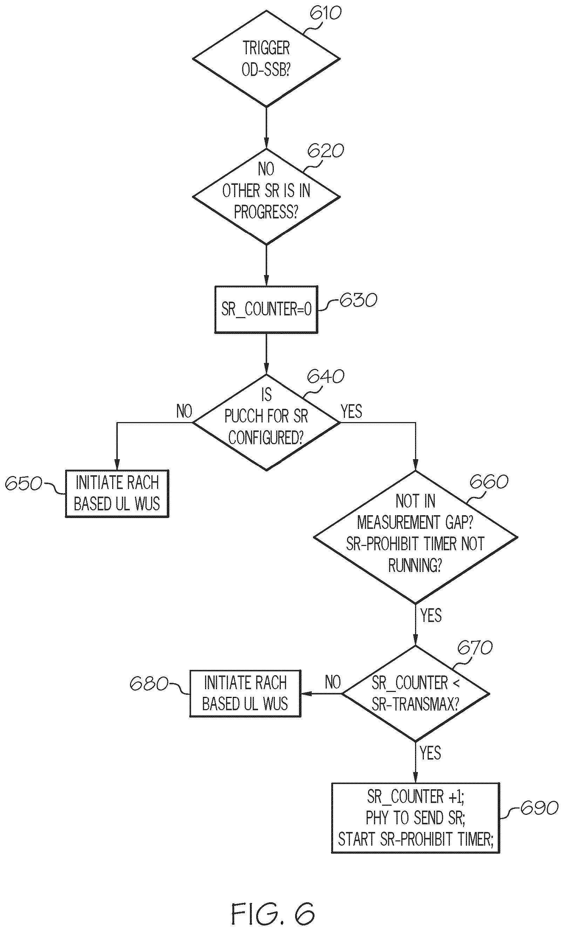

Referring to FIG. 5, the UE 500 (which may be the UE 105 of FIG. 1 or UE 300 of FIG. 3) may be configured with an UL WUS Configuration Message via an RRC message or a MAC-CE (e.g., SR configuration for on-demand SSB), by communication 540 from the PCell 510 to the UE 500. In particular, UE 500 may be provided by *schedulingRequestID-OD_SSB-SCell,* a configuration for PUCCH transmission with an on-demand SSB request for the UE 500 to transmit PUCCH as shown in FIG. 6.

The MAC entity may be configured with zero, one, or more SR configurations. An SR configuration includes a set of PUCCH resources for SR across different BWPs and cells. For requesting on-demand SSB transmissions, a dedicated SR configuration may be configured. Similar to SR for a positioning measurement gap activation/deactivation request, a dedicated SR configuration corresponds to one specific on-demand SSB transmission request. A set of dedicated SR configurations may correspond to a set of on-demand SSB transmissions e.g., with different SSB transmission periodicities or different SSB pattern in terms of frequency and time domain resources, e.g., legacy SSB pattern, compact SSB pattern, or light SSB pattern configured by RRC.

In particular, RRC configures several parameters for the scheduling request configuration of the on-demand SSB request, such as the *schedulingRequestId_OD-SSB, the sr-ProhibitTimer_OD-SSB* (per SR configuration), and/or the *sr-TransMax_OD-SSB* (per SR configuration). The *schedulingRequestId_OD-SSB* may be used to modify a SR configuration, to indicate the SR configuration to which a specific on-demand SSB transmission is mapped, and/or to indicate, in IE *SchedulingRequestresourceConfig,* the SR configuration for which a scheduling request resource is used. The *sr-ProhibitTimer_OD-SSB* may be a timer for SR transmission on PUCCH in TS 38.321. The value of the timer may be in milliseconds, such as, for example, value *ms1* corresponds to 1ms, value *ms2* corresponds to 2ms, etc. When the *sr-ProhibitTimer_OD-SSB* field is absent, the UE may apply a value 0 for the timer. The *sr-TransMax_OD-SSB* may be a maximum number of SR transmissions as described in TS 38.321. A value of *sr-TransMax_OD-SSB* of *n4* corresponds to 4, value *n8* corresponds to 8, etc. The UE variable *SR_COUNTER* may be used for the scheduling request procedure. If an SR is triggered and there are no other SRs pending corresponding to the same SR configuration, the MAC entity may be set the *SR_COUNTER* of the corresponding SR configuration to 0. When an SR is triggered, it shall be considered as pending until it is canceled.

A UE may use *schedulingRequestID-UL-WUS* to provide a configuration for UL WUS triggered on-demand SSB, in a PUCCH transmission using either PUCCH format 0 or PUCCH format 1. The UE may be provided, by *phy-PriorityIndex* in *SchedulingRequestResourceConfig,* a priority index 0 or a priority index 1 for the SR. If the UE is not provided a priority index for SR, the priority index is 0. The UE may also be provided a periodicity $SR_{PERIODICITY}$ in symbols or slots and an offset $SR_{OFFSET}$ in slots by *periodicityAndOffset* for a PUCCH transmission conveying SR.

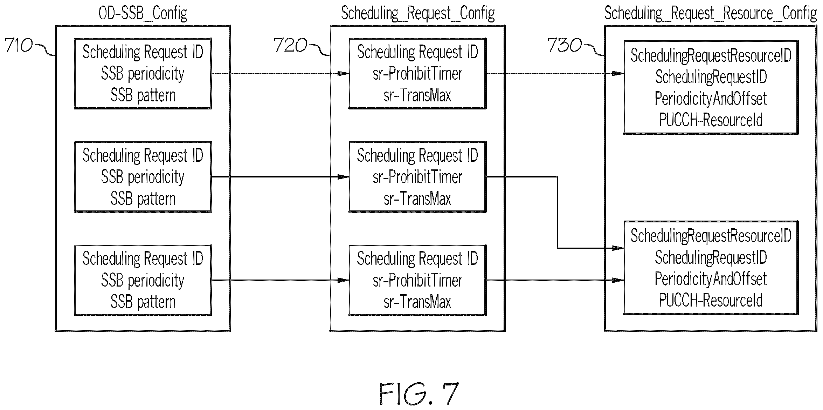

When a UE transmits a scheduling request for requesting on-demand SSB, the PUCCH resource may be selected based on the *"Scheduling Request ID"* in the *"OD-SSB_Config"*. FIG. 7 illustrates that the *"OD-SSB_Config"* includes a scheduling request ID which points towards a specific *"Scheduling Request Resource Configuration"*. The scheduling Request Resource Configuration includes a pointer towards a specific PUCCH resource.

Still referring to FIG. 5, the UE 500 may measure and/or determine the need for triggering OD-SSB in the SCells, at block 530. There are several possible conditions for the UE 500 to determine whether to trigger OD-SSB in the SCells, which can be applicable to both a PRACH-based solution and an SR-based solution. For example, UE 500 may acquire the timing of the SSB of PCell 510 and light SSB (if present) of the SCells 520. UE 500 may then compare the timing offset between PCell 510 and the SCells 520, and then determine whether the UE can operate on the SCells without the SSB being transmitted i.e., fully reply on SSB from PCell 510.

In some example embodiments, the determination by UE 500 may be based on when the received signal strength from the reference cells, such as, for example the PCell 510 (determined by the pre-defined rule or explicitly configured by higher layer parameter) associated with SSB-less SCell 520 becomes lower than a given threshold. In some example embodiments, the UE determination may be based on when the DL reception timing difference between SSB-less SCell and its associated reference cells, such as the PCell, becomes larger than a given threshold. In some example embodiments, the UE determination may be based on when the UE is not capable of operating with the reference cell, such as the PCell, as the timing reference for the SSB-less SCell.

Still referring to FIG. 5, the UE 500 may send an initial OD-SSB request 545 of the SCells via configured SR resources in the PCell link, from the UE 500 to the PCell 510. The UE 500 may receive an UL grant from the PCell 510 for sending the full OD-SSB requesting information, by message 550. The UE 500 may send a full OD-SSB request of the SCells via the MAC-CE in the UL grant PUSCH to PCell, by message 560. In particular, the UE 500 may provide in first PUSCH MAC-CE indexes for at least corresponding SCells with the need of on-demand SSB transmissions, indications of the need of OD-SSBs for corresponding SCell, and indexes for a periodic CSI-RS configuration or for a SS/PBCH block provided by higher layers, if any, for corresponding SCells. The UL MAC-CE may include the UE request of on-demand SSB and an indication of which SCells would need on-demand SSB. Upon receiving the request from UE 500, PCell 510 may activates/deactivates the OD-SSB of SCells via an Xn interface between the PCell 510 and the SCells 520. SCells 520 may confirm the activation/deactivation of OD-SSB of the SCells 520 via the Xn interface, by message 570. The PCell 510 may receive the ACK/NACK of OD-SSB activation of the SCells 520, by message 575. In particular, the UE 500 may monitor the PDCCH of the PCell 510 to receive the ACKs from activation/deactivation of OD-SSB(s) the SCells 520, by message 580. The UE 500 may receive the OD-SSB from the activated SCell 520, by message 585.

FIG. 6 illustrates a configuration for PUCCH transmission with an on-demand SSB request for the UE to transmit PUCCH. Referring to FIG. 6, a check if performed regarding whether a trigger for OD-SSB occurs, at block 610. If the trigger for OD-SSB occurs, then a check is performed whether no other SR is in progress, at block 620. The SR counter is reset to "0", at block 630. A check to determine if the PUCCH for SR has been configured is performed, at block 640. If the PUCCH for SR has not been configured, RACH-based UL WUS is initiated, at block 650. If the PUCCH for SR has been configured, checks are performed if the SR is not in the positioning measurement gap and if the SR-prohibit timer is not running, at block 660. If these conditions are satisfied, then a check is performed whether the SR counter is less than *sr-*

*TransMax,* at block 670. If the SR counter is not less than *sr-TransMax,* the RACH-based UL WUS is initiated, at block 680. If the SR counter is less than *sr-TransMax,* the SR counter is incremented by 1, the PHY sends the SR, and the *sr-Prohibit* timer is started, at block 690.

FIG. 7 illustrates the OD-SSB configuration, the Scheduling Request configuration, and the Scheduling Request resource configuration. Referring to FIG. 7 the OD-SSB configuration 710 includes scheduling request ID, SSB periodicity, and/or the SSB pattern. The Scheduling Request configuration 720 includes the scheduling request ID, *sr-ProhibitTimer,* and the *sr-Transmax* fields. The Scheduling Request resource configuration 730 includes the scheduling request resource ID, the scheduling request ID, periodicity and/or offset, and/or the PUCCH resources.

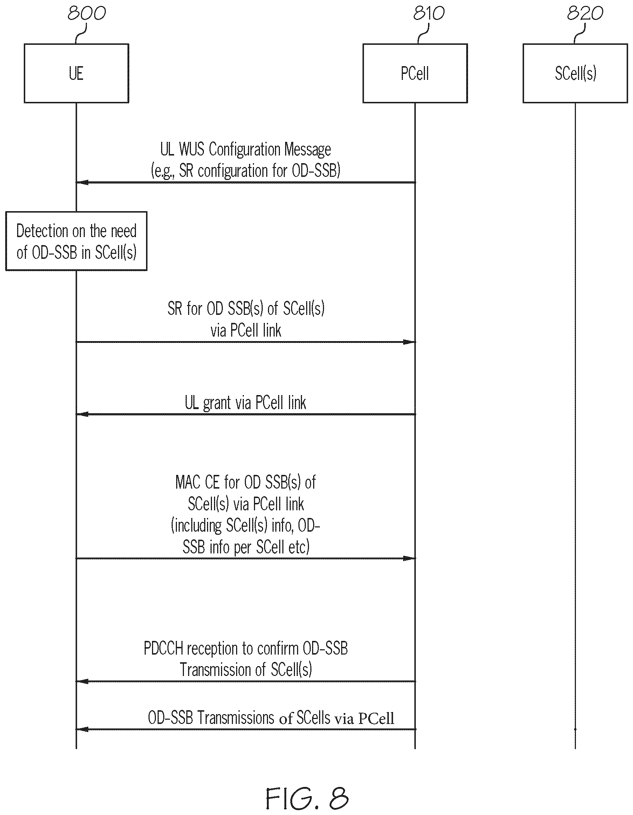

FIG. 8 illustrates a procedure of SR for the PCell on-demand SSB, without the SCells transmitting the OD-SSB. In some embodiments, as shown in FIG. 8, the OD-SSB may be transmitted by the PCell 810 on behalf of the SCells 820. In this case, SCell 820 does not need to transmit OD-SSBs, which provides energy savings. UE 800 may acquire the same information from the OD-SSB of SCells 820 via PCell 810, e.g., RRM measurements of SCells 820, time and frequency synchronization, etc. After receiving the OD-SSB of SCells 820 from PCell 810, UE 800 may directly transmit/receive to/from SCells 820, as illustrated in FIG. 8.

In some embodiments, the on-demand SSB may be triggered by using a new defined CSI triggering state (i.e., *CSI-AperiodicTriggerState*) for OD-SSB via Periodic/semi-persistent PUCCH/PUSCH. When the UE transmits only a CSI report for requesting on-demand SSB, the PUCCH/PUSCH resource may be selected based on the corresponding CSI report configuration.

FIGS. 9 to 16 are flowcharts of operations for methods, according to some embodiments. Referring to FIG. 9, a method for operations related to on-demand SSB is shown. The method includes receiving, by a user equipment (UE), such as UE 105 of FIG. 1, UE 300 of FIG. 3, UE 500 of FIG. 5, or UE 800 of FIG. 8, from a primary cell, such as primary cell 110 of FIG. 1, primary cell 310 of FIG. 3, primary cell 510 of FIG. 5, or primary cell 810 of FIG. 8, configuration for performing radio resource management (RRM) measurements based on on-demand Synchronization Signal Block (SSB) of one or more secondary cells, such as secondary cell 120, at block 910. The method includes receiving, by the UE from the primary cell, an activation indication from the primary cell, where the activation indication includes on-demand SSB information related to activation of the one or more secondary cells, at block 920. The method includes transmitting, after receiving the activation indication, control and/or data channel data by the UE to the one or more secondary cells, at block 930.

Referring to FIG. 10, the method may further include receiving, by the UE from the primary cell, prior to receiving the activation indication, configuration information of the on-demand SSB for transmitting the control and/or data channel data to the one or more secondary cells, at block 1010.

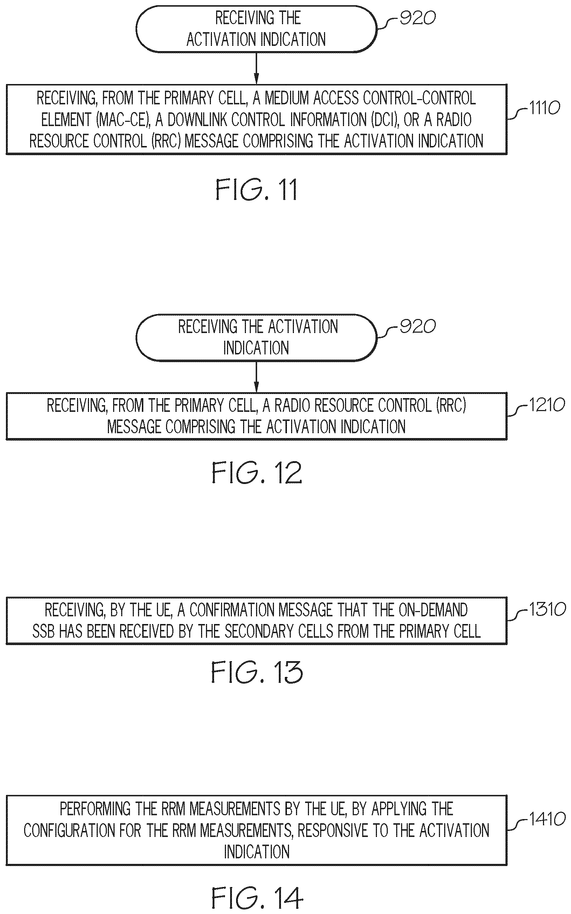

Referring to FIG. 11, the receiving the activation indication of block 920 may include receiving, from the primary cell, a Medium Access Control-Control Element (MAC-CE), a Downlink Control Information (DCI), or a Radio Resource Control (RRC) message including the activation indication, at block 1110. The activation indication may include the on-demand SSB information of on-demand SSB measurement objects. The on-demand SSB information of the on-demand SSB measurement objects comprises an SSB index and/or an SSB position within an SSB burst, time-domain behavior information, and/or absolute frequency positions of the on-demand SSB. The time-domain behavior information may include a number of the SSB bursts, a gap between the SSB bursts, a triggering offset, a periodicity of on-demand SSB transmissions, and/or a time offset of an SSB-based RRM Measurement Timing Configuration (SMTC) window. The activation indication may be received from the primary cell using a Medium Access Control-Control Element (MAC-CE). An on-demand SSB burst may be received by the UE at least T slots after a signaling slot in which the UE receives signaling from a gNB. The on-demand SSB burst may be received by the UE in a time window beginning in a first slot that includes a candidate SSB index 0 of a candidate secondary cell or includes a first actually transmitted SSB index on the one or more secondary cells. Time domain positions of the on-demand SSB burst may be configured by the gNB.

Referring to FIG. 12, receiving the activation indication, at block 920, may include receiving, from the primary cell, a Radio Resource Control (RRC) message including the activation indication, at block 1210. The activation indication may include the on-demand SSB information including multiple candidate values for a periodicity of on-demand SSB transmissions. The UE may receive the activation indication over a physical downlink shared channel (PDSCH). The activation indication may include the on-demand SSB information of candidate secondary cells of the one or more secondary cells.

Referring to FIG. 13, the method may further include receiving, by the UE, a confirmation message that the on-demand SSB has been received by the secondary cells from the primary cell, at block 1310.

Referring to FIG. 14, the method may further include performing the RRM measurements by the UE, by applying the configuration for the RRM measurements, responsive to the activation indication, at block 1410.

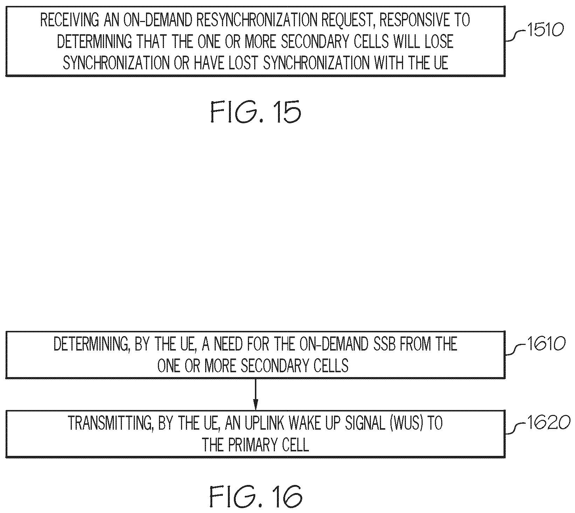

Referring to FIG. 15, the method may further include receiving an on-demand resynchronization request, responsive to determining that the one or more secondary cells will lose synchronization or have lost synchronization with the UE, at block 1510. The on-demand SSB is triggered by a gNB or the UE. The on-demand SSB transmissions and periodic SSB transmissions may both coexist. In other words, the on-demand SSB transmissions and the periodic SSB transmissions may be transmitted simultaneously, or the on-demand SSB transmissions may be transmitted between periodic SSB transmissions.

Referring to FIG. 16, the method may further include determining, by the UE, a need for the on-demand SSB from the one or more secondary cells, at block 1610. The method may further include transmitting, by the UE, an uplink Wake Up Signal (WUS) to the primary cell, at block 1620. The uplink WUS may include an indication of a request by the UE for the on-demand SSB from the one of more secondary cells.

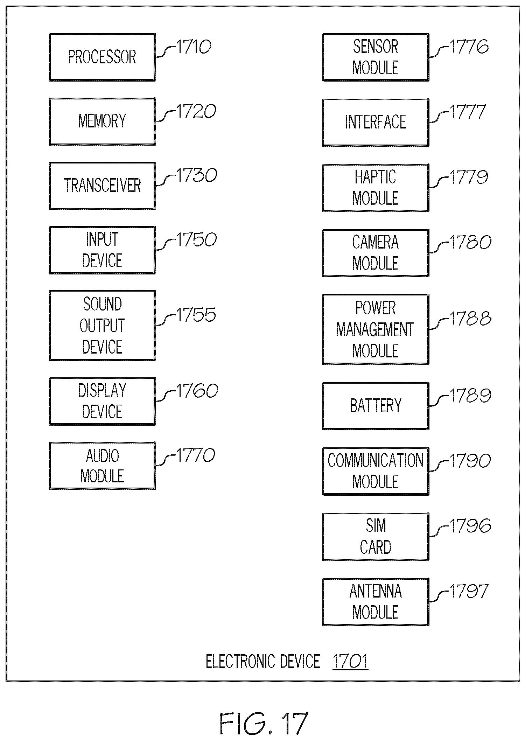

FIG. 17 is a block diagram of an electronic device in a network environment, according to some embodiments. This device may be similar to the UE 105 of FIG. 1, UE 300 of FIG. 3, UE 500 of FIG. 5, or UE 800 of FIG. 8, and may perform operations similar to those of the flowcharts of FIGS. 9 to 16. Referring to FIG. 17, an electronic device 1701 in a network environment 100 as in FIG. 1, may communicate with a gNB or base station 111 of a primary cell 110 via a first network 115 (e.g., a wireless communication network or radio channel), or a base station or gNB 121 of a secondary cell 120 via a second network 125 (e.g., a wireless communication network). The electronic device 1701 may include a processor 1710, a memory 1720, an input device 1750, a sound output device 1755, a display device 1760, an audio module 1770, a sensor module 1776, an interface 1777, a haptic module 1779, a camera module 1780, a power management module 1788, a battery 1789, a communication module 1790, a subscriber identification module (SIM) card 1796, or an antenna module 1797. In some embodiments, at least one (e.g., the display device 1760 or the camera module 1780) of the components may be omitted from the electronic device 1701, or one or more other components may be added to the electronic device 1701. Some of the components may be implemented as a single integrated circuit (IC). For example, the sensor module 1776 (e.g., a fingerprint sensor, an iris sensor, or an illuminance sensor) may be embedded in the display device 1760 (e.g., a display).

The processor 1710 may execute software (e.g., a program) to control at least one other component (e.g., a hardware or a software component) of the electronic device 1701 coupled with the processor 1710 and may perform various data processing or computations, such as the operations of the flowcharts of FIGS. 9-16.

In some embodiments, at least one memory device 1720 may include computer program code embodied on a non-transitory computer readable medium. The computer program code may be configured to cause the at least one processor to perform operations including receiving, by the transceiver 1730 of the electronic device 1701 from a primary cell, configuration for performing radio resource management (RRM) measurements based on on-demand Synchronization Signal Block (SSB) of one or more secondary cells, receiving, by the transceiver 1730 of the electronic device 1701 from the primary cell, an activation indication from the primary cell, where the activation indication includes on-demand SSB information related to activation of the one or more secondary cells, and transmitting, after receiving the activation indication, control and/or data channel data by the transceiver 1730 of the electronic device 1701 to the one or more secondary cells. The transceiver 1730 of the electronic device 1701 may use the antenna module 1797 to transmit control and/or data channel data to the one or more secondary cells.

As at least part of the data processing or computations, the processor 1710 may load a command or data received from another component (e.g., the sensor module 1776 or the communication module 1790) in memory 1720, process the command or the data stored in the memory 1720, and store resulting data in memory 1720. The processor 1710 may include a main processor (e.g., a central processing unit (CPU) or an application processor (AP)), and/or an auxiliary processor (e.g., a graphics processing unit (GPU), an image signal processor (ISP), a sensor hub processor, or a communication processor (CP)) that is operable independently from, or in conjunction with, the main processor. Additionally or alternatively, the auxiliary processor may be adapted to consume less power than the main processor, or execute a particular function. The auxiliary processor may be implemented as being separate from, or a part of, the main processor.

The auxiliary processor may control at least some of the functions or states related to at least one component (e.g., the display device 1760, the sensor module 1776, or the communication module 1790) among the components of the electronic device 1701, instead of the main processor while the main processor is in an inactive (e.g., sleep) state, or together with the main processor while the main processor is in an active state (e.g., executing an application). The auxiliary processor (e.g., an image signal processor or a communication processor) may be implemented as part of another component (e.g., the camera module 1780 or the communication module 1790) functionally related to the auxiliary processor.

The memory 1720 may store various data used by at least one component (e.g., the processor 1710 or the sensor module 1776) of the electronic device 1701. The various data may include, for example, software (e.g., the program) and input data or output data for a command related thereto. The memory 1720 may include the volatile memory or the non-volatile memory. Non-volatile memory may include internal memory and/or external memory. The program may be stored in the memory 1720 as software, and may include, for example, an operating system (OS), middleware, or an application.

The input device 1750 may receive a command or data to be used by another component (e.g., the processor 1710) of the electronic device 1701, from the outside (e.g., a user) of the electronic device 1701. The input device 1750 may include, for example, a microphone, a mouse, or a keyboard.

The sound output device 1755 may output sound signals to the outside of the electronic device 1701. The sound output device 1755 may include, for example, a speaker or a receiver. The speaker may be used for general purposes, such as playing multimedia or recording, and the receiver may be used for receiving an incoming call. The receiver may be implemented as being separate from, or a part of, the speaker.

The display device 1760 may visually provide information to the outside (e.g., a user) of the electronic device 1701. The display device 1760 may include, for example, a display, a hologram device, or a projector and control circuitry to control a corresponding one of the display, hologram device, and projector. The display device 1760 may include touch circuitry adapted to detect a touch, or sensor circuitry (e.g., a pressure sensor) adapted to measure the intensity of force incurred by the touch.

The audio module 1770 may convert a sound into an electrical signal and vice versa. The audio module 1770 may obtain the sound via the input device 1750 or output the sound via the sound output device 1755 or a headphone of an external electronic device directly (e.g., wired) or wirelessly coupled with the electronic device 1701.

The sensor module 1776 may detect an operational state (e.g., power or temperature) of the electronic device 1701 or an environmental state (e.g., a state of a user) external to the electronic device 1701, and then generate an electrical signal or data value corresponding to the detected state. The sensor module 1776 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1777 may support one or more specified protocols to be used for the electronic device 1701 to be coupled with the external electronic device directly (e.g., wired) or wirelessly. The interface 1777 may include, for example, a high- definition multimedia interface (HDMI), a universal serial bus (USB) interface, a secure digital (SD) card interface, or an audio interface.

The haptic module 1779 may convert an electrical signal into a mechanical stimulus (e.g., a vibration or a movement) or an electrical stimulus which may be recognized by a user via tactile sensation or kinesthetic sensation. The haptic module 1779 may include, for example, a motor, a piezoelectric element, or an electrical stimulator.

The camera module 1780 may capture a still image or moving images. The camera module 1780 may include one or more lenses, image sensors, image signal processors, or flashes. The power management module 1788 may manage power supplied to the electronic device 1701. The power management module 1788 may be implemented as at least part of, for example, a power management integrated circuit (PMIC).

The battery 1789 may supply power to at least one component of the electronic device 1701. The battery 1789 may include, for example, a primary cell which is not rechargeable, a secondary cell which is rechargeable, or a fuel cell.

The communication module 1790 may support establishing a direct (e.g., wired) communication channel or a wireless communication channel between the electronic device 1701 and the external electronic device (and performing communication via the established communication channel. The communication module 1790 may include one or more communication processors that are operable independently from the processor 1710 (e.g., the AP) and supports a direct (e.g., wired) communication or a wireless communication. The communication module 1790 may include a wireless communication module (e.g., a cellular communication module, a short-range wireless communication module, or a global navigation satellite system (GNSS) communication module) or a wired communication module (e.g., a local area network (LAN) communication module or a power line communication (PLC) module). A corresponding one of these communication modules may communicate with the external electronic device via the first network (e.g., a short-range communication network, such as BLUETOOTH™, wireless-fidelity (Wi-Fi) direct, or a standard of the Infrared Data Association (IrDA)) or the second network (e.g., a long-range communication network, such as a cellular network, the Internet, or a computer network (e.g., LAN or wide area network (WAN)). These various types of communication modules may be implemented as a single component (e.g., a single IC), or may be implemented as multiple components (e.g., multiple ICs) that are separate from each other. The wireless communication module may identify and authenticate the electronic device 1701 in a communication network, such as the first network or the second network, using subscriber information (e.g., international mobile subscriber identity (IMSI)) stored in the subscriber identification module 1796.

The antenna module 1797 may transmit or receive a signal or power to or from the outside (e.g., the external electronic device) of the electronic device 1701. The antenna module 1797 may include one or more antennas, and, therefrom, at least one antenna appropriate for a communication scheme used in the communication network, such as the first network or the second network, may be selected, for example, by the communication module 1790 (e.g., the wireless communication module). The signal or the power may then be transmitted or received between the communication module 1790 and the external electronic device via the selected at least one antenna. The antenna module 1797 may be coupled to the transceiver 1730 to facilitate transmitting and receiving signals by the UE.

Embodiments of the subject matter and the operations described in this specification may be implemented in digital electronic circuitry, or in computer software, firmware, or hardware, including the structures disclosed in this specification and their structural equivalents, or in combinations of one or more of them. Embodiments of the subject matter described in this specification may be implemented as one or more computer programs, i.e., one or more modules of computer-program instructions, encoded on computer-storage medium for execution by, or to control the operation of data-processing apparatus. Alternatively or additionally, the program instructions can be encoded on an artificially-generated propagated signal, e.g., a machine-generated electrical, optical, or electromagnetic signal, which is generated to encode information for transmission to suitable receiver apparatus for execution by a data processing apparatus. A computer-storage medium can be, or be included in, a computer-readable storage device, a computer-readable storage substrate, a random or serial-access memory array or device, or a combination thereof. Moreover, while a computer-storage medium is not a propagated signal, a computer-storage medium may be a source or destination of computer-program instructions encoded in an artificially-generated propagated signal. The computer-storage medium can also be, or be included in, one or more separate physical components or media (e.g., multiple CDs, disks, or other storage devices). Additionally, the operations described in this specification may be implemented as operations performed by a data-processing apparatus on data stored on one or more computer-readable storage devices or received from other sources.

While this specification may contain many specific implementation details, the implementation details should not be construed as limitations on the scope of any claimed subject matter, but rather be construed as descriptions of features specific to particular embodiments. Certain features that are described in this specification in the context of separate embodiments may also be implemented in combination in a single embodiment. Conversely, various features that are described in the context of a single embodiment may also be implemented in multiple embodiments separately or in any suitable subcombination. Moreover, although features may be described above as acting in certain combinations and even initially claimed as such, one or more features from a claimed combination may in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described herein. Other embodiments are within the scope of the following claims. In some cases, the actions set forth in the claims may be performed in a different order and still achieve desirable results. Additionally, the processes depicted in the accompanying figures do not necessarily require the particular order shown, or sequential order, to achieve desirable results. In certain implementations, multitasking and parallel processing may be advantageous.

As will be recognized by those skilled in the art, the innovative concepts described herein may be modified and varied over a wide range of applications. Accordingly, the scope of claimed subject matter should not be limited to any of the specific example teachings discussed above, but is instead defined by the following claims.

## Claims

1. A method comprising:

    receiving, by a user equipment, UE, from a primary cell, configuration for on-demand Synchronization Signal Block, SSB, information of one or more secondary cells;
    receiving, by the UE from the primary cell, an activation indication from the primary cell, wherein the activation indication comprises the on-demand SSB information related to activation of the on-demand SSB of one or more secondary cells; and
    receiving, after receiving the activation indication, on-demand SSB transmissions by the UE from the one or more secondary cells,
    wherein the activation indication and/or configuration for the on-demand SSB information comprises an SSB index and/or an SSB position within an SSB burst, time-domain behavior information, and/or absolute frequency positions of the on-demand SSB.

2. The method of Claim 1, further comprising:

    receiving, by the UE from the primary cell, a deactivation indication comprising on-demand SSB information related to deactivation of on-demand SSB of one or more secondary cells; and
    after receiving the deactivation indication, stopping receiving of the on-demand SSB transmissions by the UE from the one or more secondary cells.

3. The method of Claim 1 or 2, wherein receiving the activation indication comprises:

receiving, from the primary cell, a Medium Access Control-Control Element, MAC-CE, a Downlink Control Information, DCI, or a Radio Resource Control, RRC, message comprising the activation indication, wherein the activation indication comprises the on-demand SSB information of on-demand SSB measurement objects.

4. The method of any one of Claims 1 to 3, wherein the time-domain behavior information comprises a number of the SSB bursts, a gap between the SSB bursts, a triggering offset, a periodicity of on-demand SSB transmissions, and/or a time offset of an SSB-based RRM Measurement Timing Configuration, SMTC, window.

5. The method of any one of Claims 1 to 4, wherein the activation indication is received from the primary cell using a Medium Access Control-Control Element, MAC-CE, wherein an on-demand SSB burst is received by the UE at least T slots after a slot in which the UE receives activation indication from the primary cell.

6. The method of Claim 5, wherein k is equal to T, and wherein a value of k comprises $m + 3\, N_{\text{slot}}^{\text{subframe},\mu} + 1$ where slot $n+m$ is a slot indicated for PUCCH transmission with HARQ-ACK information for PDSCH reception and $N_{\text{slot}}^{\text{subframe},\mu}$ is a number of slots per subframe for SCS configuration $\mu$ of the PUCCH transmission.

7. The method of Claim 5 or 6, wherein the on-demand SSB burst is received by the UE in a time window beginning in a first slot that includes a candidate SSB index 0 of a candidate secondary cell among the one or more secondary cells or includes a first actually transmitted SSB index on the one or more secondary cells.

8. The method of any one of Claims 1 to 7, wherein receiving the activation indication comprises:

receiving, from the primary cell, a Radio Resource Control, RRC, message comprising the activation indication, wherein the activation indication comprises the on-demand SSB information including multiple candidate values for a periodicity of on-demand SSB transmissions.

9. The method of any one of Claims 1 to 8, wherein the UE receives the activation indication over a physical downlink shared channel, PDSCH.

10. The method of any one of Claims 1 to 9, wherein the activation indication from the primary cell comprises information related to on-demand SSB measurement objects from candidate secondary cells of the one or more secondary cells.

11. The method of Claim 10, wherein the information related to on-demand SSB measurement objects comprises SSB index and/or position within an SSB burst, time-domain behavior information, and/or information related to absolute frequency positions of the on-demand SSB.

12. The method of any one of Claims 1 to 11, further comprising:
receiving, by the UE, a confirmation message that the on-demand SSB has been transmitted by the one or more secondary cells to the UE.

13. The method of any one of Claims 1 to 12, further comprising:
performing RRM measurements by the UE, by applying the configuration for the RRM measurements, responsive to the activation indication.

14. The method of any one of Claims 1 to 13, further comprising:
receiving an on-demand resynchronization request by the UE, responsive to determining that the one or more secondary cells will lose synchronization or have lost synchronization with the UE.

15. The method of any one of Claims 1 to 14, wherein the on-demand SSB is triggered by a gNB or the UE.

FIG. 1

210 — L3 measurement

220 — SCell addition

230 — L3 measurement

SCell activation

240

A UE may assume SCell SSB TX

250 — L1/L3 measurement

260 — Data TX/RX (monitor PDCCH)

270 — SCell deactivation or release

FIG. 2

310

PCell

320

SCell

300

UE

Light RS

Light RS
measurement SCell

Light RS measurement report

DCI to activate SCell DTX "on" state

SCell activation

On demand SSB

On-demand SSB
measurement SCell

On-demand SSB
measurement and report

DCI to activate SCell DTX "off" state

FIG. 3

FIG. 4

FIG. 5

FIG. 6

FIG. 7

710 — OD-SSB_Config

Scheduling Request ID
SSB periodicity
SSB pattern

Scheduling Request ID
SSB periodicity
SSB pattern

Scheduling Request ID
SSB periodicity
SSB pattern

720 — Scheduling_Request_Config

Scheduling Request ID
sr-ProhibitTimer
sr-TransMax

Scheduling Request ID
sr-ProhibitTimer
sr-TransMax

Scheduling Request ID
sr-ProhibitTimer
sr-TransMax

730 — Scheduling_Request_Resource_Config

SchedulingRequestResourceID
SchedulingRequestID
PeriodicityAndOffset
PUCCH-ResourceId

SchedulingRequestResourceID
SchedulingRequestID
PeriodicityAndOffset
PUCCH-ResourceId

FIG. 8

START

RECEIVING, BY A UE FROM A PRIMARY CELL, CONFIGURATION FOR PERFORMING RRM MEASUREMENTS BASED ON ON-DEMAND SYNCHRONIZATION SIGNAL BLOCK (SSB) OF ONE OR MORE SECONDARY CELLS — 910

RECEIVING, BY THE UE FROM THE PRIMARY CELL, AN ACTIVATION INDICATION FROM THE PRIMARY CELL, WHEREIN THE ACTIVATION INDICATION COMPRISES ON-DEMAND SSB INFORMATION RELATED TO ACTIVATION OF THE ONE OR MORE SECONDARY CELLS — 920

TRANSMITTING, AFTER RECEIVING THE ACTIVATION INDICATION, CONTROL AND/OR DATA CHANNEL DATA BY THE UE TO THE ONE OR MORE SECONDARY CELLS — 930

FIG. 9

RECEIVING, BY THE UE FROM THE PRIMARY CELL, PRIOR TO RECEIVING THE ACTIVATION INDICATION, CONFIGURATION INFORMATION OF THE ON-DEMAND SSB FOR TRANSMITTING THE CONTROL AND/OR DATA CHANNEL DATA TO THE ONE OR MORE SECONDARY CELLS — 1010

FIG. 10

RECEIVING THE
ACTIVATION INDICATION 920

RECEIVING, FROM THE PRIMARY CELL, A MEDIUM ACCESS CONTROL-CONTROL ELEMENT (MAC-CE), A DOWNLINK CONTROL INFORMATION (DCI), OR A RADIO RESOURCE CONTROL (RRC) MESSAGE COMPRISING THE ACTIVATION INDICATION 1110

FIG. 11

RECEIVING THE ACTIVATION
INDICATION 920

RECEIVING, FROM THE PRIMARY CELL, A RADIO RESOURCE CONTROL (RRC) MESSAGE COMPRISING THE ACTIVATION INDICATION 1210

FIG. 12

RECEIVING, BY THE UE, A CONFIRMATION MESSAGE THAT THE ON-DEMAND SSB HAS BEEN RECEIVED BY THE SECONDARY CELLS FROM THE PRIMARY CELL 1310

FIG. 13

PERFORMING THE RRM MEASUREMENTS BY THE UE, BY APPLYING THE CONFIGURATION FOR THE RRM MEASUREMENTS, RESPONSIVE TO THE ACTIVATION INDICATION 1410

FIG. 14

RECEIVING AN ON-DEMAND RESYNCHRONIZATION REQUEST, RESPONSIVE TO DETERMINING THAT THE ONE OR MORE SECONDARY CELLS WILL LOSE SYNCHRONIZATION OR HAVE LOST SYNCHRONIZATION WITH THE UE ⌐1510

FIG. 15

DETERMINING, BY THE UE, A NEED FOR THE ON-DEMAND SSB FROM THE ONE OR MORE SECONDARY CELLS ⌐1610

TRANSMITTING, BY THE UE, AN UPLINK WAKE UP SIGNAL (WUS) TO THE PRIMARY CELL ⌐1620

FIG. 16

| | | | |
|---|---|---|---|
| PROCESSOR | 1710 | SENSOR MODULE | 1776 |
| MEMORY | 1720 | INTERFACE | 1777 |
| TRANSCEIVER | 1730 | HAPTIC MODULE | 1779 |
| INPUT DEVICE | 1750 | CAMERA MODULE | 1780 |
| SOUND OUTPUT DEVICE | 1755 | POWER MANAGEMENT MODULE | 1788 |
| DISPLAY DEVICE | 1760 | BATTERY | 1789 |
| AUDIO MODULE | 1770 | COMMUNICATION MODULE | 1790 |
| | | SIM CARD | 1796 |
| | | ANTENNA MODULE | 1797 |

ELECTRONIC DEVICE 1701

FIG. 17

**EUROPEAN SEARCH REPORT**

Application Number

EP 25 16 4356

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/056948 A1 (WU MIN [CN] ET AL) 15 February 2024 (2024-02-15) * paragraphs [0136], [0139], [0157], [0158], [0165] - [0175], [0180], [0185] - [0193]; figures 6-13 * | 1-15 | INV. H04L5/00 H04W52/02 |
| A | WO 2023/151463 A1 (MEDIATEK INC [CN]) 17 August 2023 (2023-08-17) * page 6, line 43 - page 8, line 46; figures 6, 7 * | 1-15 | |
| A | HYOUNGJU JI ET AL: "On-demand SSB SCell operation", 3GPP DRAFT; R1-2400740; TYPE DISCUSSION; NETW_ENERGY_NR_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Athens, GR; 20240226 - 20240301 19 February 2024 (2024-02-19), XP052568519, Retrieved from the Internet: URL:https://www.3gpp.org/ftp/TSG_RAN/WG1_RL1/TSGR1_116/Docs/R1-2400740.zip R1-2400740 On-demand SSB SCell operation.docx [retrieved on 2024-02-19] * page 1 - page 4 * | 1-15 | TECHNICAL FIELDS SEARCHED (IPC) H04L H04W |

-/--

The present search report has been drawn up for all claims

| Place of search | Date of completion of the search | Examiner |
|---|---|---|
| The Hague | 5 August 2025 | Lähteenmäki, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LEI WANG ET AL: "Discussion on on-demand SSB SCell operation", 3GPP DRAFT; R1-2400566; TYPE DISCUSSION; NETW_ENERGY_NR_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Athens, GR; 20240226 - 20240301 19 February 2024 (2024-02-19), XP052568348, Retrieved from the Internet: URL:https://www.3gpp.org/ftp/TSG_RAN/WG1_RL1/TSGR1_116/Docs/R1-2400566.zip R1-2400566 Discussion on On-demand SSB scell operation-final.docx [retrieved on 2024-02-19] * page 1 - page 8 * | 1-15 | |

----- 

-/--

TECHNICAL FIELDS SEARCHED (IPC)

The present search report has been drawn up for all claims

| Place of search | Date of completion of the search | Examiner |
|---|---|---|
| The Hague | 5 August 2025 | Lähteenmäki, Laura |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 ........................................................................................

& : member of the same patent family, corresponding
document

EPO FORM 1503 03.82 (P04C01)

**EUROPEAN SEARCH REPORT**

**Application Number**

EP 25 16 4356

Europäisches Patentamt
European Patent Office
Office européen des brevets

## DOCUMENTS CONSIDERED TO BE RELEVANT

| Category | Citation of document with indication, where appropriate, of relevant passages | Relevant to claim |
|---|---|---|
| A | PATRICK MERIAS ET AL: "Summary #2 of on-demand SSB for NES", 3GPP DRAFT; R1-2401674; TYPE DISCUSSION; NETW_ENERGY_NR_ENH-CORE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANC , vol. RAN WG1, no. Athens, GR; 20240226 - 20240301 1 March 2024 (2024-03-01), XP052577732, Retrieved from the Internet: URL:https://www.3gpp.org/ftp/TSG_RAN/WG1_RL1/TSGR1_116/Docs/R1-2401674.zip R1-2401674.docx [retrieved on 2024-03-01] * page 8, par. 1; page 27, par. 8-9; page 35, par. 11-15 * | 1-15 |

-----

**CLASSIFICATION OF THE APPLICATION (IPC)**

**TECHNICAL FIELDS SEARCHED (IPC)**

The present search report has been drawn up for all claims

| Place of search | Date of completion of the search | Examiner |
|---|---|---|
| The Hague | 5 August 2025 | Lähteenmäki, Laura |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 3 of 3

## ANNEX TO THE EUROPEAN SEARCH REPORT
## ON EUROPEAN PATENT APPLICATION NO.

EP 25 16 4356

This annex lists the patent family members relating to the patent documents cited in  the above-mentioned European search report.
The members are as contained in the European Patent Office EDP file on
The European Patent Office is in no way liable for these particulars which are merely given for the purpose of information.

05-08-2025

| Patent document cited in search report | Publication date | Patent family member(s) | | Publication date |
|---|---|---|---|---|
| US 2024056948 A1 | 15-02-2024 | CN | 117676776 A | 08-03-2024 |
| | | EP | 4569950 A1 | 18-06-2025 |
| | | KR | 20250034486 A | 11-03-2025 |
| | | US | 2024056948 A1 | 15-02-2024 |
| | | WO | 2024035182 A1 | 15-02-2024 |
| WO 2023151463 A1 | 17-08-2023 | TW | 202333516 A | 16-08-2023 |
| | | US | 2025112715 A1 | 03-04-2025 |
| | | WO | 2023151463 A1 | 17-08-2023 |

EPO FORM P0459

For more details about this annex : see Official Journal of the European Patent Office, No. 12/82